# EUROPÄISCHE PATENTSCHRIFT

(11) **EP 3 367 050 B1**
(45) Veröffentlichungstag und Bekanntmachung des Hinweises auf die Patenterteilung: **09.10.2019**
(21) Anmeldenummer: 18157372.6
(22) Anmeldetag: 19.02.2018
(51) Int. Cl.: F41J 5/02, F41J 5/08, G01V 8/20

(54) **MESSRAHMEN MIT OPTISCHEM FILTER ZUR BERÜHRUNGSLOSEN OPTISCHEN ERMITTLUNG EINER DURCHSCHUSSPOSITION**
MEASURING FRAME WITH OPTICAL FILTER FOR CONTACTLESS OPTICAL SENSING OF A PENETRATING POSITION
CADRE DE MESURE À FILTRE OPTIQUE DESTINÉ À LA DÉTERMINATION OPTIQUE SANS CONTACT D'UNE POSITION DE TRAJET D'UN PROJECTILE

(30) Priorität: 27.02.2017 DE 202017101091 U
(43) Veröffentlichungstag der Anmeldung: 29.08.2018
(73) Patentinhaber: Meyton Elektronik GmbH, 49328 Melle (DE)
(72) Erfinder: WITTE, Udo, 32139 Spenge (DE); TEGELHÜTTER, Stefan, 49328 Melle (DE); HOFFMANN, Stefan, 49328 Melle (DE)
(74) Vertreter: Grünecker Patent- und Rechtsanwälte PartG mbB

(56) Entgegenhaltungen:
- EP-A1- 1 653 200
- CN-A- 106 052 492
- DE-A1-102013 009 248
- DE-A1-102014 101 773
- US-A- 3 624 401
- US-A1- 2007 246 887

## Beschreibung

Die vorliegende Erfindung bezieht sich auf einen Messrahmen mit optischem Filter zur berührungslosen optischen Ermittlung einer Durchschussposition eines Geschosses durch eine Zielfläche. Weiterhin bezieht sich die vorliegende Erfindung auch auf ein Anzeigesystem, das mindestens einen derartigen Messrahmen verwendet.

Im Sportschützenbereich und bei der Ausbildung von Schützen sind Messrahmen, die eine Durchschussposition mit Hilfe berührungsloser Lichtschrankentechnik ermitteln, seit geraumer Zeit im Einsatz. Bei einem derartigen optischen Messverfahren wird ein den Messrahmen durchfliegendes Geschoss mit Hilfe von Infrarotlichtschranken berührungsfrei vermessen. Eine einzelne Infrarotlichtschranke setzt sich dabei aus einem Infrarotsender, der Infrarotlicht in einem gebündelten Lichtstrahl aussendet, und einem Infrarotempfänger, der dem Infrarotsender gegenüber liegt und die Helligkeit des einfallenden Infrarotlichtstrahls misst, zusammen. Je nach Größe der Messrahmen sind bis zu 500 eigenständige Lichtschranken verbaut, die in einem festen Gitterraster an den Innenseiten des Rahmens angeordnet sind.

Die Infrarotsender der einzelnen Lichtschranken erzeugen innerhalb des Rahmens einen kontinuierlichen Lichtvorhang. Fliegt ein Geschoss durch diesen Lichtvorhang, werden sowohl auf der horizontalen X-Achse als auch auf der vertikalen Y-Achse des Messrahmens mehrere Lichtschranken teilweise oder vollständig unterbrochen.

Der Vorteil dieser Lösung liegt zum einen in der Verschleißfreiheit, da keine Verbrauchsmaterialien wie Papier oder Gummibänder involviert sind. Zum anderen hat die Verwendung optischer Messrahmen den Vorteil einer hohen Messgenauigkeit und einer geringen Anfälligkeit gegenüber Verschmutzung und Temperaturschwankungen.

Derartige lineare Messrahmen sind beispielsweise aus der DE 4115995 A1 oder der EP 034284 A1 bekannt. Aus der US 2012 0194802 A1 ist außerdem eine kombinierte Messvorrichtung bekannt, die zwei sich überkreuzende optische Lichtschranken zum Abdecken des innersten Zielbereichs und ein akustisches Verfahren zum Ermitteln einer Durchschussposition in einem Außenbereich verwendet. Dabei wird eine Reihe von Lichtempfängern, die auf einem Kreisbogensegment angeordnet sind, dazu verwendet die Strahlungsintensität, die von einem gegenüber liegenden Lichtsender emittiert wird, an den Punkten des Kreisbogens zu ermitteln. Die Durchschussposition wird anhand der unterschiedlichen Helligkeitswerte ermittelt.

Weiterhin offenbart die US 4 949 942 A einen Messrahmen für eine automatische Schussauswertung, bei dem ein Lichtvorhang aus einer Vielzahl von Sendern und Empfängern ausgebildet wird. Zum Erzeugen von zylindrischen Lichtstrahlen mit kreisförmigem Querschnitt sind zylindrische Strahlformungsmittel ("light beam outlet means") sowohl auf der Sender-, wie auch auf der Empfängerseite vorgesehen.

Die Patentschrift EP 3 004 789 B1 offenbart einen Messrahmen zum berührungslosen optischen Ermitteln einer Durchschussposition eines Geschosses durch eine Zielfläche mit einer ersten Strahlungsquelle zum Aussenden eines divergierenden Strahlungsfeldes, sowie eine zweite Strahlungsquelle zum Aussenden eines zweiten divergierenden Strahlungsfeldes. Das erste und zweite Strahlungsfeld kreuzen sich in einer Ebene quer zu einer Durchschussrichtung unter einem Winkel. Mindestens eine erste und mindestens eine zweite optische Empfängereinrichtung sind jeweils der ersten und zweiten Strahlungsquelle zugeordnet, empfangen ausgesendete Strahlung und werten diese aus.

Die Patentanmeldung CN 106 052 492 A betrifft die photoelektrischen Feldprüfung, insbesondere auf einer Zielpositionstestvorrichtung für eine mehrzeilige Laserkreuzungscodierung. Mit einer Fotodetektoreinheit in der Zielpositionstestvorrichtung wird Änderungen des photoelektrischen Feldes gemessen.

Die Patentanmeldung US 3 624 401 A betrifft die Zielbewertung eines Schützen. Ultraviolettes Licht einer ausgewählten Wellenlänge wird so über einen Bereich oder eine Ebene angrenzend an ein nicht-materielles Ziel gerichtet, dass ein auf das Ziel auftreffendes Projektil das ultraviolette Lichtfeld durchlaufen muss. Eine Vielzahl von Linsen ist angeordnet, um das von einem Projektil reflektierte Licht auf jeweilige digital codierte Masken zu fokussieren. Es werden Filter bereitgestellt, um Lichtenergie anderer als der ausgewählten Wellenlänge abzulehnen. Licht, das durch bestimmte Schlitze in einer Maske läuft, aktiviert einen fotoelektrischen Sensor. Ausgangssignale von den Sensoren werden decodiert, um den Weg des Projektils in Bezug auf das Ziel anzuzeigen.

Es besteht allerdings immer noch das Bedürfnis, einen kompakten und robusten Messrahmen anzugeben, der präzise Messungen erlaubt, dabei kostengünstig herstellbar ist und vollständig auf Verschleißmaterialien wie akustische Membranen verzichtet und schließlich universell eingesetzt werden kann.

Diese Aufgabe wird durch den Gegenstand des unabhängigen Anspruchs gelöst. Vorteilhafte Weiterbildungen der vorliegenden Erfindung sind Gegenstand der abhängigen Ansprüche.

Dabei basiert die vorliegende Erfindung auf der Idee, dass ein Messrahmen zum berührungslosen optischen Ermitteln einer Durchschussposition eines Geschosses durch eine Zielfläche mindestens eine erste Strahlungsquelle zum Aussenden eines divergierenden Strahlungsfeldes besitzt, sowie eine zweite Strahlungsquelle zum Aussenden eines zweiten divergierenden Strahlungsfeldes. Das erste und zweite Strahlungsfeld kreuzen sich in einer Ebene quer zu einer Durchschussrichtung unter einem Winkel. Mindestens eine erste und mindestens eine zweite optische Empfängereinrichtung sind jeweils der ersten und zweiten Strahlungsquelle zugeordnet, empfangen ausgesendete Strahlung und werten diese aus. Die optischen Empfängereinrichtungen weisen jeweils ein Array von optischen Empfängerelementen auf, die so ausgewertet werden, dass eine räumlich ausgedehnte Abschattungslage in Folge des zu detektierenden Geschosses bestimmt wird. Des Weiteren umfasst der Messrahmen mindestens eine Empfängerblende, die unerwünschte Strahlung ausblendet, und einen optischen Filter, welcher zumindest für einen ersten vorbestimmten Wellenlängenbereich durchlässig ist.

Für den optischen Filter ist es insbesondere vorteilhaft, wenn der erste vorbestimmte Wellenlängenbereich zumindest ein lokales Maximum des Spektrums der Strahlungsquelle enthält. Dadurch ist es möglich, dass die Intensität der Strahlung, die zur Messung der Durchschussposition verwendet wird, optimal ausgenutzt wird. In besonders vorteilhafter Weise umfasst der erste Wellenlängenbereich monochromatische Strahlung aus dem infraroten Spektralbereich, beispielsweise 900 nm. Der Infrarotwellenlängenbereich ist zur Messung der Durchschussposition eines Geschosses besonders vorteilhaft, da der Schütze den Lichtvorhang nicht sieht, und somit durch den Lichtvorhang nicht irritiert wird. Außerdem eignet sich Strahlung aus dem Infrarotwellenlängenbereich insbesondere, da sowohl Strahlungsquellen, als auch Empfänger und Filter in der Industrie verbreitet, gut verstanden und kostengünstig sind.

Des Weiteren ist es vorteilhaft, wenn der optische Filter für zumindest einen zweiten Wellenlängenbereich aus dem Spektrum des Sonnenlichts nicht durchlässig ist. Dadurch ist es möglich, dass der Einfluss durch Signale, die durch die Strahlung der Sonne entstehen, (im Folgenden auch als Hintergrund bezeichnet) reduziert wird. In besonders vorteilhafter Weise wird in diesem zweiten Wellenlängenbereich die Strahlung total reflektiert, sodass die optischen Filter die Strahlung nicht absorbieren können und sich somit die Filter auch nicht aufwärmen können. In besonders vorteilhafter Weise transmittieren die optischen Filter nur den ersten Wellenlängenbereich und reflektieren zumindest einen Teil des zweiten Wellenlängenbereichs, der Infrarotstrahlung umfasst. Durch das Zusammenspiel des ersten Wellenlängenbereichs, für den der Filter durchlässig ist, und des zweiten Wellenlängenbereichs, für den der Filter reflektierend und/oder absorbieren ist, wird das Signal-Hintergrund-Verhältnis des Masserahmens optimiert und somit kann robust und unabhängig von der Umgebung gemessen werden. Als solch ein optischer Filter kann zum Beispiel eine Glasscheibe mit geeigneter Beschichtung verwendet werden.

Des Weiteren kann der Einfluss von Streustrahlung dadurch reduziert werden, dass in Strahlrichtung aufeinanderfolgende Empfängerblenden mit unterschiedlichen Lochblenden in unmittelbarer Nähe zu den Empfängerelementen vorgesehen werden. Besonders vorteilhaft ist eine Empfängerblende mit einem Array von Lochblenden, wobei jedes Loch einem optischen Empfängerelement zugeordnet ist.

Des Weiteren kann die Robustheit des Systems dadurch gesteigert werden, dass der optische Filter an einer Empfängerblende anliegt und eine Filterfläche zumindest ein Array von Lochblenden wenigstens teilweise abdeckt.

Durch ein Abstandsblech mit Aussparungen, die der Filterfläche entsprechen, kann der optische Filter quer zur Strahlrichtung positioniert werden. Des Weiteren kann der optische Filter in Strahlrichtung durch ein Deckblech und die Empfängerblende, an welcher der optische Filter anliegt, positioniert werden.

Insbesondere weist jede der optischen Empfängereinrichtungen ein Array von optischen Empfängerelementen auf, die so ausgewertet werden, dass eine räumlich ausgedehnte Abschattungslage in Folge des zu detektierenden Geschosses bestimmt wird. Insbesondere sind die optischen Empfängerelemente in mindestens zwei Reihen angeordnet und die Empfängerelemente einer Reihe sind versetzt gegenüber den Empfängerelementen einer benachbarten Reihe angeordnet.

Als Strahlungsquellen eignen sich dabei zum Beispiel Licht emittierende Dioden, LEDs, die Infrarotstrahlung aussenden, oder Laserdioden, wie beispielsweise VCSEL (vertical cavity surface emitting laser), bei denen Laserstrahlung senkrecht zur Ebene des Halbleiterchips abgestrahlt wird. Als Detektorelemente werden beispielsweise Fotodioden eingesetzt. Selbstverständlich können aber auch alle anderen geeigneten Sensortechniken, wie beispielsweise Fototransistoren verwendet werden.

Um den Lichtweg vergleichsweise kurz und damit die Gesamtabmessungen des Messrahmens klein zu halten, muss die Auflösung der Abschattungslage auf der Empfängerseite besonders kurz sein und es muss bei einer Anordnung mit einer Vielzahl von Strahlungsfeldern sichergestellt sein, dass kein Übersprechen von einer nicht zugehörigen Strahlungsquelle stattfindet. Um eine derartige hochauflösende Anordnung zu realisieren, kann gemäß einer vorteilhaften Weiterbildung der vorliegenden Erfindung eine Blendenanordnung vorgesehen werden. Dabei kann zum einen eine oder mehrere Blenden in unmittelbarer Nähe zur Strahlungsquelle angeordnet werden, um den divergierenden Strahl entsprechend zu formen, bevor er das Messfeld erreicht.

Zum anderen können Blenden in unmittelbarer Nähe zu den Empfängerelementen vorgesehen werden, um die auf die Empfängerelemente auftreffende Strahlung, nachdem sie den Messbereich durchquert hat, zu begrenzen. Eine besonders hohe Genauigkeit erzielt man durch Kombinieren dieser Blendentechnik, so dass sowohl vor der Strahlungsquelle als auch vor den Empfängerelementen eine entsprechende Blendenanordnung vorgesehen ist.

Auf besonders einfache und effiziente Weise kann der erfindungsgemäße Messrahmen realisiert werden, wenn die erste und zweite Strahlungsquelle und die zugehörige erste und zweite Empfängereinheit so angeordnet sind, dass sich die Mittelachsen der ausgesendeten Strahlungsfelder im Wesentlichen rechtwinklig kreuzen. Neben einer vereinfachten mechanischen Realisierung dieser Anordnung ist auch die geometrische Berechnung der Tangenten mit dieser Anordnung besonders einfach, da der Messrahmen dann als ersten Quadrant eines kartesischen Koordinatensystems interpretiert werden kann. Um die Präzision der Messung und den erfassbaren Messbereich auszudehnen, kann eine Vielzahl von Strahlungsquellen und zugeordneten Empfängereinrichtungen vorgesehen sein.

Besonders vorteilhaft ist dabei, wenn der Messrahmen, der die Zielfläche im Wesentlichen rechteckförmig begrenzt, durch vier im Wesentlichen gleichartig aufgebaute Messleisten gebildet ist, die entlang der Kanten der rechteckförmigen Begrenzung angeordnet sind. Das bedeutet, dass jede der Kanten des Messrahmens Strahlungsquellen und Empfängereinrichtungen trägt, so dass die gesamte Zielfläche durch eine Vielzahl von sich kreuzenden divergierenden Strahlungsfeldern abgedeckt ist.

Bei dem Auswertungsverfahren können prinzipiell vier Tangenten an das hindurch geflogene Geschoss berechnet werden. Zur eindeutigen Bestimmung der Durchschussposition ist aber nur die Berechnung von drei Tangenten erforderlich. Somit liegt im Falle einer Berechnung von vier Tangenten eine Redundanz vor, die für eine Plausibilitätsprüfung des Messergebnisses verwendet werden kann.

Die erfindungsgemäße Anordnung bietet außerdem die Möglichkeit, einen Kalibrierschritt einzuschalten. Dabei wird mindestens eine der Strahlungsquellen kurzzeitig abgeschaltet und es wird ein Differenzwert der Strahlungsintensität zwischen dem beleuchteten und unbeleuchteten Zustand an der zugehörigen Empfängereinheit ermittelt und ein Kalibrierfaktor daraus berechnet. Diese Kalibrierwerte können beispielsweise nach jeder Messung neu bestimmt werden.

Auf diese Weise können Lichtveränderungen, zum Beispiel durch Verschmutzung während des Betriebes, festgestellt werden, indem der gemessene Differenzwert mit einem Schwellenwert verglichen wird. Eine Warnmeldung kann erzeugt werden, wenn dieser Schwellenwert unterschritten wird, wenn also die Intensität der ausgesendeten Strahlung nicht mehr den Erfordernissen entspricht. Ein Benutzer kann rechtzeitig über einen kritischen Zustand des Messrahmens informiert werden, bevor es beispielsweise aufgrund einer Verschmutzung zu Messfehlern kommt.

Mit Hilfe des Verfahrens lässt sich ohne zusätzlichen Aufwand neben der Durchschussposition auch das Kaliber eines den Messrahmen durchfliegenden Geschosses berechnen. Dies kann ebenfalls für eine Plausibilitätsprüfung herangezogen werden.

Zum besseren Verständnis der vorliegenden Erfindung wird diese anhand der in den nachfolgenden Figuren dargestellten Ausführungsbeispiele näher erläutert. Dabei werden gleiche Teile mit gleichen Bezugszeichen und gleichen Bauteilbezeichnungen versehen. Weiterhin können auch einige Merkmale oder Merkmalskombinationen aus den gezeigten und beschriebenen unterschiedlichen Ausführungsformen für sich eigenständige, erfinderische oder erfindungsgemäße Lösungen darstellen.

Es zeigen:
- **Fig.** 1: eine perspektivische Darstellung eines Messrahmens gemäß der vorliegenden Erfindung;
- **Fig. 2**: eine Draufsicht auf den Messrahmen der Figur 1;
- **Fig. 3**: eine teilweise geöffnete Detailansicht des erfindungsgemäßen Messrahmens;
- **Fig. 4**: eine Draufsicht auf eine erste Blendeneinrichtung;
- **Fig. 5**: ein Detail aus Figur 4;
- **Fig. 6**: ein weiteres Detail aus Figur 4;
- **Fig. 7**: eine weitere Blendeneinrichtung;
- **Fig. 8**: ein Detail aus Figur 7;
- **Fig. 9**: ein weiteres Detail aus Figur 7;
- **Fig. 10**: ein weiteres Detail aus Figur 7;
- **Fig. 11**: eine Draufsicht auf eine dritte Blendeneinrichtung;
- **Fig. 12**: ein Detail aus Figur 11;
- **Fig. 13**: ein weiteres Detail aus Figur 11;
- **Fig. 14**: eine weitere Blendeneinrichtung;
- **Fig. 15**: eine weitere Blendeneinrichtung;
- **Fig. 16**: eine weitere Blendeneinrichtung;
- **Fig. 17**: eine Prinzipdarstellung der Wirkungsweise der ersten Strahlformer in Blendeneinrichtungen;
- **Fig. 18**: eine schematische Darstellung der Wirkungsweise der zweiten Strahlformer in Blendeneinrichtung;
- **Fig. 19**: eine schematische Darstellung des auftreffenden Lichtstrahls auf der Empfängerseite;
- **Fig. 20**: eine schematische Darstellung der Wirkungsweise der empfängerseitigen Blenden;
- **Fig. 21**: eine gekippte Darstellung der Anordnung aus Figur 20;
- **Fig. 22**: eine schematische Darstellung der Empfängereinrichtungen und der ihnen am nächsten liegenden Blendenanordnung;
- **Fig. 23**: eine schematische Darstellung der Berechnungsgrundlage;
- **Fig. 24**: eine schematische Darstellung des Messfeldes mit fiktiven Lichtschranken, die der Berechnung dienen;
- **Fig. 25**: eine teilweise geöffnete Detailansicht des erfindungsgemäßen Messrahmens mit optischem Filter;
- **Fig. 26**: ein Detail aus Figur 25;

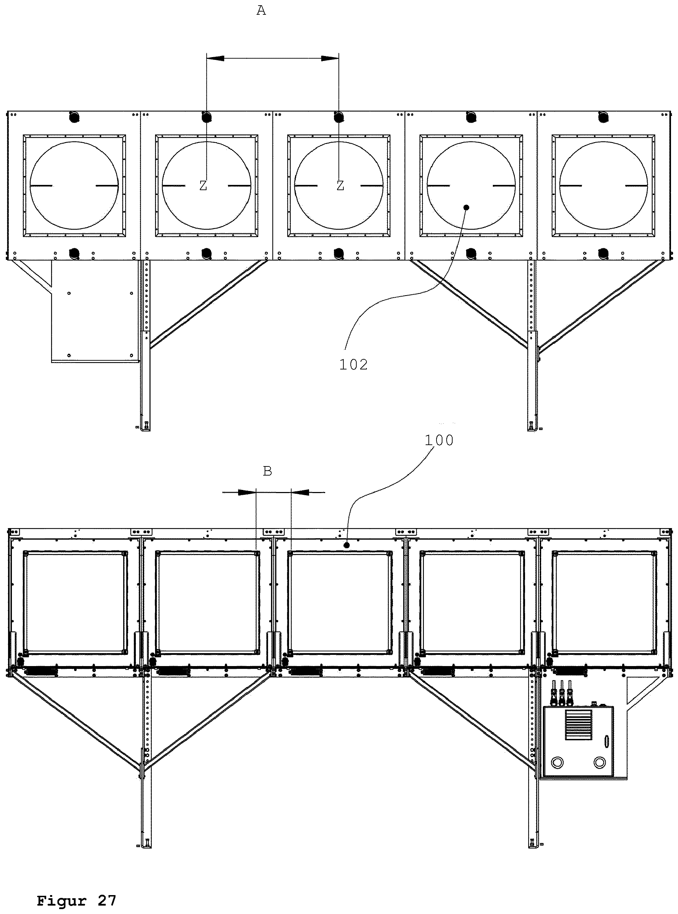

- **Fig. 27**: ein Messrahmen für die Disziplin olympische Schnellfeuerwaffe.

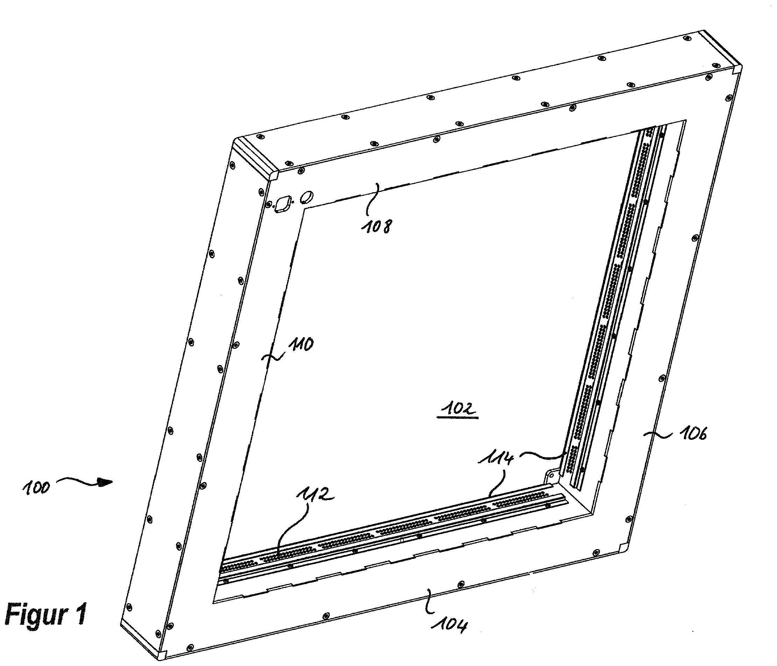

Figur 1 zeigt in einer perspektivischen Darstellung einen Messrahmen 100 gemäß einer vorteilhaften Ausführungsform der vorliegenden Erfindung.

In der gezeigten Ausführungsform ist der Messrahmen im Wesentlichen quadratisch ausgebildet und umgibt eine ebenfalls im Wesentlichen quadratische Zielebene 102, durch welche die zu detektierenden Geschosse hindurch fliegen.

Wie dies aus den nachfolgenden Figuren noch deutlich wird, dringen aus jeder der Messrahmenleisten 104, 106, 108 und 110 divergierende Strahlungsfelder, die auf die jeweils gegenüber liegende Messrahmenleiste auftreffen. Dadurch kreuzen sich die Strahlungsfelder der jeweils senkrecht aufeinander stehenden Messrahmenleisten rechtwinklig.

Jede der Messleisten 104 bis 110 besitzt sowohl Strahlungsquellen wie auch optische Empfängereinrichtungen. In der Figur 1 sind lediglich die äußersten Blendenöffnungen für die darunter angeordneten Empfängereinrichtungen erkennbar.

Diese Blendenarrays 112 sind, da sie den Durchschussbereich 102 begrenzen, noch von einer transparenten Abdeckung, beispielsweise einer Acrylglasscheibe, bedeckt. In Figur 1 sind die zugehörigen Halterungen 114 erkennbar. Eine transparente Abdeckung kann die Strahlungsquelle, die Empfängereinrichtung und die optischen Filter vor Verschmutzung schützen.

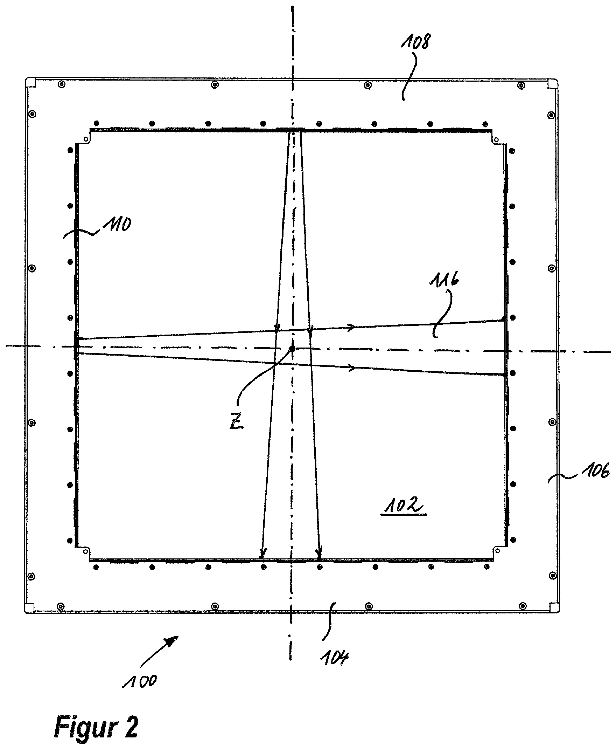

Figur 2 zeigt in einer Draufsicht den Messrahmen 100 aus Figur 1. In Figur 2 ist schematisch der Verlauf zweier divergierender Strahlungsfelder 116 illustriert, die sich in der Zielebene 102 kreuzen. Da nun jede der Messrahmenleisten entsprechend mit Strahlungsquellen und Empfängereinrichtungen ausgerüstet ist, lässt sich die gesamte Zielebene mit diesen divergierenden Strahlungsfeldern 116 abdecken. Das Zentrum Z der Zielebene ist bei der erfindungsgemäßen Lösung eindeutig durch die mechanischen Gegebenheiten festgelegt.

Als Strahlungsquellen eignen sich beispielsweise lichtemittierende Dioden (LED), die im Infrarotbereich emittieren. Selbstverständlich können aber auch andere Strahlungsquellen, wie Laserdioden oder dergleichen, verwendet werden. Passend zu dem jeweiligen verwendeten Typ Strahlungsquelle wird die entsprechende Empfängereinrichtung gewählt. Beispielsweise können dies Fotodioden oder Fototransistoren sein.

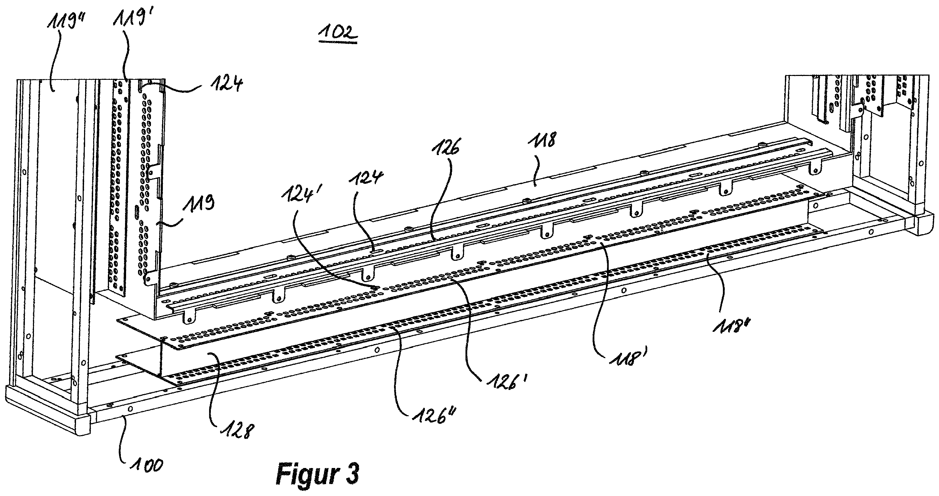

Gemäß der vorliegenden Erfindung sind an jeder der Messrahmenleisten 104, 106, 108, 110 diverse Blendenleisten angeordnet. Dabei umfasst jede der Blendenleisten Lochblenden zum Formen der ausgesendeten Strahlung an einem Ort, der in unmittelbarer Nähe zu den Strahlungsquellen angeordnet ist und Lochblenden zum Fokussieren der auf den Empfänger fallenden Strahlung an einem Ort, der unmittelbar über den Empfängerelementen liegt. Figur 3 verdeutlicht in einer Teilansicht die Anordnung der Blendenleisten.

Erfindungsgemäß gibt es zwei Typen von Blendenleisten, nämlich einmal diejenigen Leisten, die beispielsweise unten und rechts angeordnet sind und diejenigen, die oben und links montiert sind. Auf diese Weise wird sichergestellt, dass jeweils zwei unterschiedliche Leisten einander gegenüber liegen, sodass die von der Strahlungsquelle ausgesendete Strahlung an der gegenüber liegenden Messrahmenleiste auf die zugehörigen Empfängerelemente trifft.

In Figur 3 ist eine Ausführungsform gezeigt, in der drei erste Blendenleisten 118, 118' und 118" vorgesehen sind. Dabei besitzt jede der Blendenleisten 118, 118', 118" Lochblenden für das Formen des ausgesendeten Strahlungsfeldes und für das Abdecken der zu empfangenden Strahlung nach dem Passieren der Zielebene. Wie dies aus den nachfolgenden Figuren noch deutlich wird, hat die der Zielebene 102 nächst gelegene Blendenleiste 118 Langlochblenden 124 zum Formen des Strahlungsfeldes 116 bevor dieses in die Zielebene eintritt. Weiterhin besitzt die Blendenleiste 118 für das von der gegenüber liegenden Messrahmenleiste eintreffende Strahlungsfeld kreisförmige Lochblenden, welche die auf die Empfängerelemente auftreffende Strahlung begrenzen (Bezugszeichen 126). In einem gewissen Abstand zu der ersten Blendenleiste 118 ist eine weitere Blendenleiste 118' angeordnet, die zum einen enger begrenzte Lochblenden 126' zum Begrenzen der einfallenden Strahlung aufweist und zum anderen eine etwas kleiner dimensionierte Langlochblende 124' zum Formen der ausgesendeten Strahlung.

Unmittelbar über dem hier nicht dargestellten Schaltungsträger, auf dem die LEDs und Fotodioden montiert sind, ist die dritte Blendenleiste 118" angeordnet. In Figur 3 ist hier nur das Array von Empfängerlochblenden 126" erkennbar, da zum Abschirmen gegenüber ungewollter Streustrahlung durch die in dieser Messrahmenleiste befindlichen Strahlungsquellen eine Trennblende 128 vorgesehen ist.

Die entsprechenden zweiten Blendenleisten 119, 119' und 119" unterscheiden sich von den ersten Blendenleisten 118, 118', 118" durch die Position der Senderblenden und Empfängerblenden. Diese ist so gewählt, dass eine geradlinige Interaktion mit den jeweils unmittelbar gegenüber liegenden Empfängerelementen sichergestellt ist. Die Abmessungen der Empfängerlochblenden und der Senderlochblenden sind aber aus Symmetriegründen identisch gewählt.

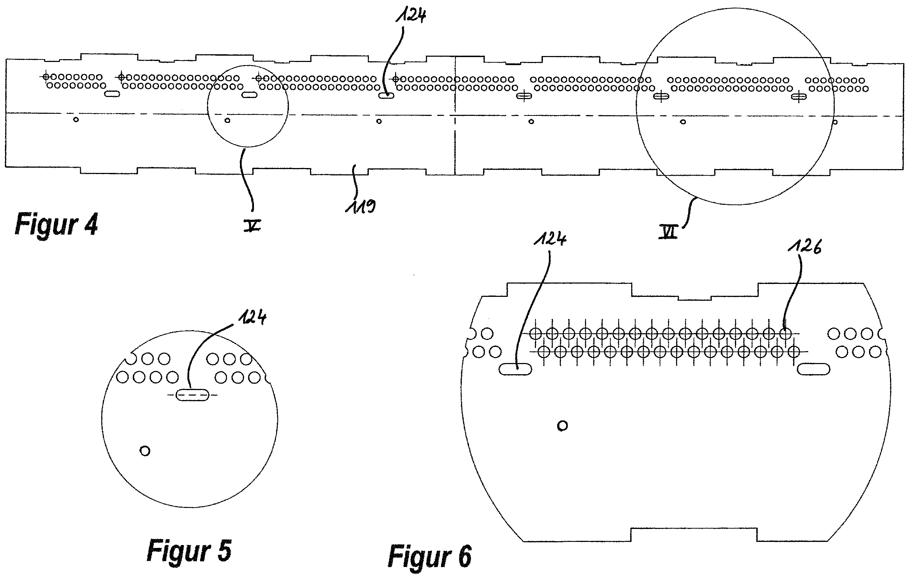

Die Figuren 4 bis 6 zeigen entsprechend die äußere zweite Blende 119, welche unmittelbar an die Zielebene 102 angrenzt. Gemäß der vorliegenden Ausführungsform sind insgesamt sechs Strahlungsquellen an dieser Messrahmenleiste vorgesehen, sodass entsprechend die Blendenleiste 119 sechs Langlochblenden 124 aufweist. Gemäß der speziellen Ausführungsform dieser Figuren weist die Empfängereinrichtung ein Array von 32 Empfängerelementen auf, sodass optisch fluchtend mit diesen Empfängerelementen in der Blendenleiste 119 für jedes Empfängerelementearray ein Array von 32 Empfängerlochblenden 126 vorgesehen ist.

Um die Auflösung und die Genauigkeit zu verbessern, sind insbesondere zwei Reihen von Empfängerelementen so angeordnet, dass sie jeweils versetzt zueinander sind, wie dies aus Figur 6 deutlich wird.

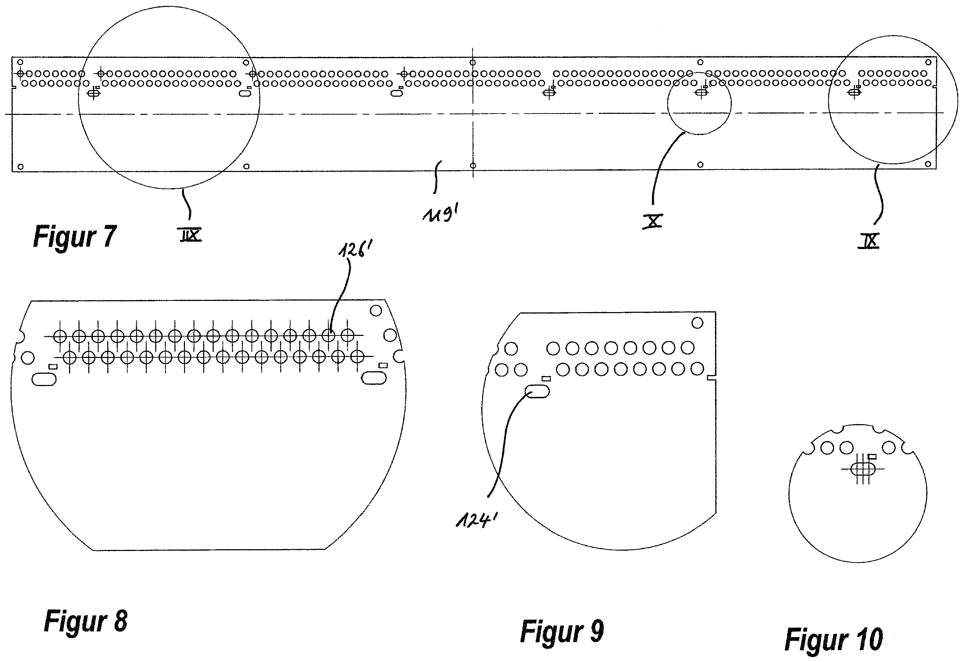

Die mittlere zweite Blendenleiste 119', welche sich in größerer Nähe zu der Platine mit den Strahlungsquellen und Empfängerelementen befindet, ist in den Figuren 7 bis 10 dargestellt. Die Empfängerlochblenden 126' sind dabei beispielsweise mit dem gleichen Durchmesser gewählt wie die Empfängerlochblenden 126. Selbstverständlich könnte aber auch ein anderer Durchmesser gewählt werden. Die Langlochblenden für die ausgesendete Strahlung 124' ist aber von unterschiedlicher Form im Vergleich zu der Langlochblende 124 aus den Figuren 4 bis 6. So kann die Langlochblende 124' beispielsweise mit demselben Radius, aber einer kürzeren Erstreckung als die äußere Lochblende 124 ausgeformt werden. Durch die Begrenzung der ausgesendeten Strahlung auf nur einen geringeren Teilbereich lässt sich erfindungsgemäß eine deutliche Homogenisierung der verwendeten Strahlung erreichen, wodurch die Messfehler geringer und die Auswertung vereinfacht wird.

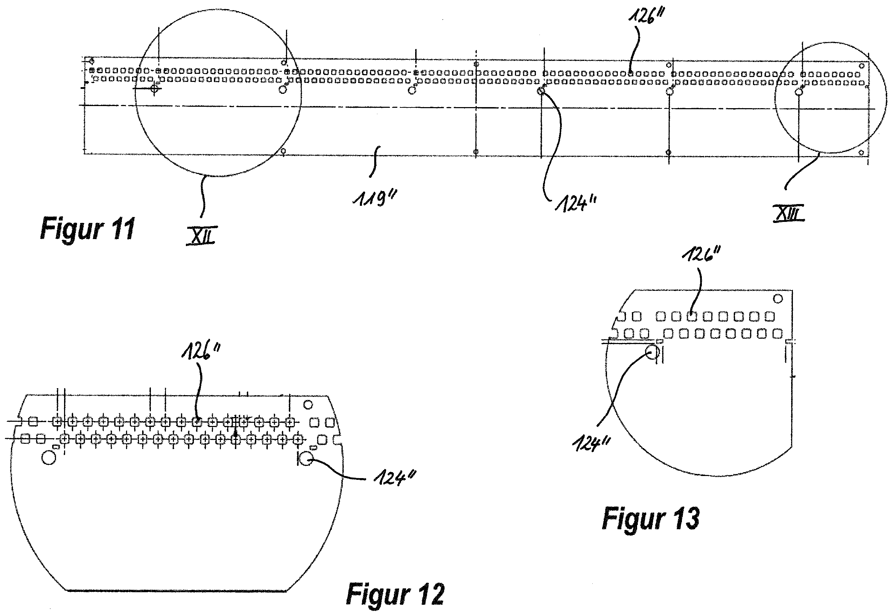

Die Figuren 11 bis 13 schließlich zeigen die innerste zweite Blendenleiste 119". Diese Blendenleiste befindet sich in der geringsten Entfernung zu den eigentlichen Bauelementen und hat zum ersten Formen des ausgesendeten Strahlungsfeldes eine kreisförmige Senderblende 124". Jedem Empfängerelement ist eine Empfängerlochblende 126" zugeordnet, die eine im Wesentlichen rechteckförmige Gestalt mit verrundeten Ecken besitzt. Eine solche rechteckförmige Ausgestaltung ermöglicht eine besonders effiziente Nutzung der bis hierhin einfallenden Strahlung, da die rechteckförmigen Empfängerlochblenden 126" im Wesentlichen einer Außenkontur der darunterliegenden Empfängerelemente entsprechen.

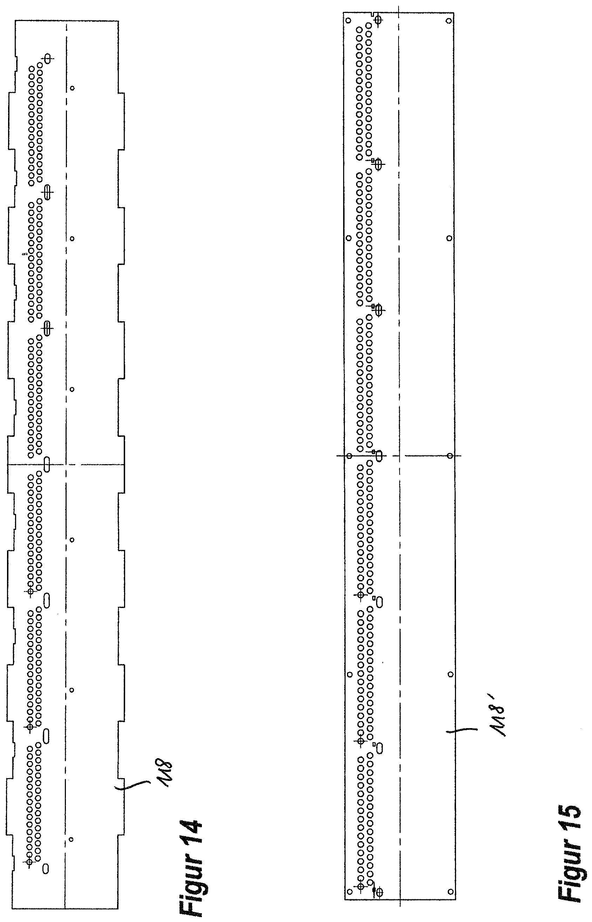

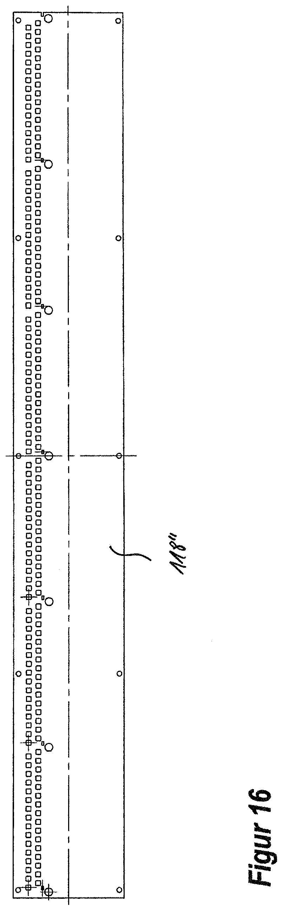

Die Figuren 14 bis 16 illustrieren die korrespondierenden ersten Blendenleisten 118, 118' und 118", die an den jeweils gegenüber liegenden Messrahmenleisten angebracht sind, sodass jeweils ein Array von Empfängerelementen einer Strahlungsquelle gegenüber liegt. Abgesehen davon sind die Abmessungen und Formen der Sender und Empfängerlochblenden identisch. Dies hat den Vorteil, dass die Stanzwerkzeuge zur Herstellung der Blendenleisten vereinheitlicht werden können.

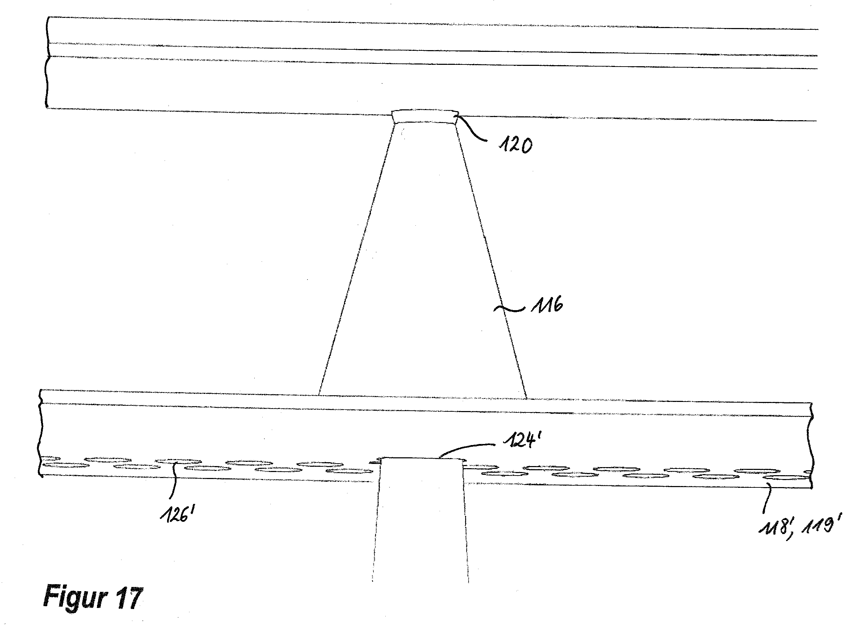

Nachfolgend soll mit Bezug auf die Figuren 17 bis 22 im Detail auf die Strahlungsführung bei der Emission und Detektion eingegangen werden.

Figur 17 zeigt die Wirkung einer Langlochblende 124'. Insbesondere wird aus dem kegelförmigen Strahlungsfeld 116 einer Strahlungsquelle 120, beispielsweise einer LED, mit Hilfe der Langlochblende 124' ein länglicher wesentlich reduzierter Bereich herausgeschnitten. Durch diese Beschränkung wird, wie bereits erwähnt, die Homogenität der Strahlung, die die Langlochblende 124 verlässt, erhöht. Anzumerken ist, dass in Figur 17 die kreisförmige Blende 124" nicht dargestellt ist, um die Übersichtlichkeit zu erhöhen. Die Position der Lochblende könnte in Figur 17 auch gleichgesetzt werden mit der Position der Strahlungsquelle 120.

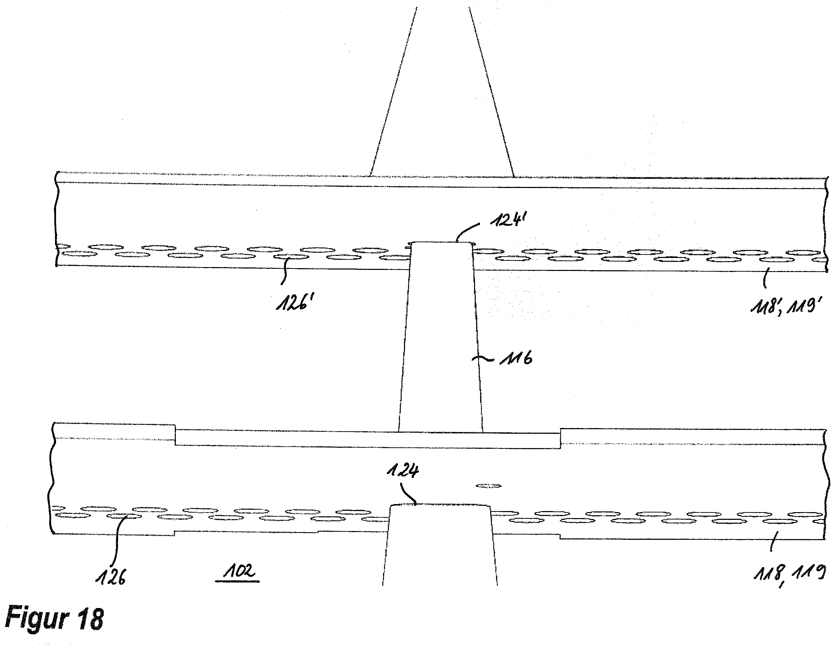

Figur 18 zeigt in der Übersicht die Wirkungsweise der beiden Langlochblenden 124' und 124, die so beabstandet voneinander sind, dass die größere Langlochblende 124 keinen signifikanten Anteil der Strahlung mehr entfernt, sondern lediglich die Randbereiche formt und die Streustrahlung verringert.

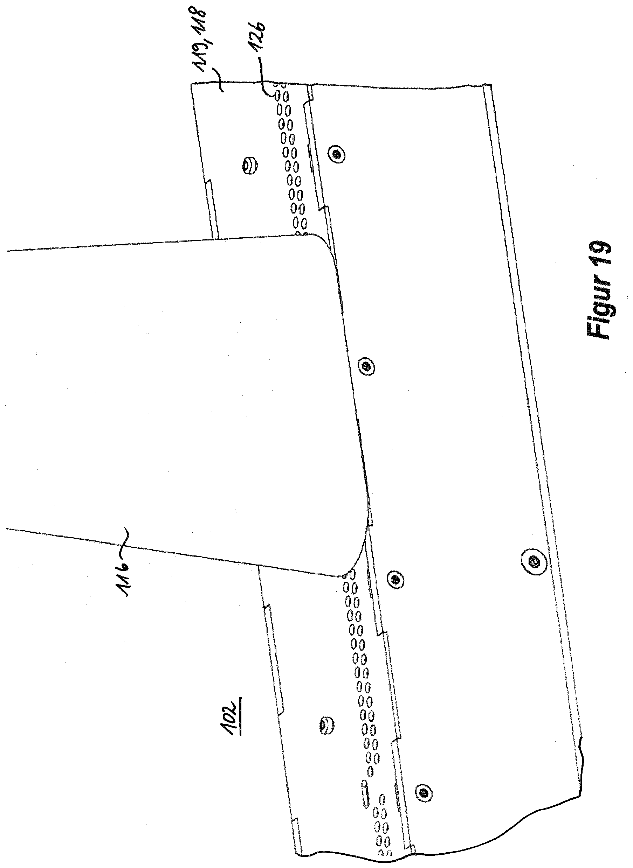

Wie in Figur 19 gezeigt, trifft ein gut definiertes divergierendes Strahlungsfeld 116 auf die jeweils gegenüber liegende Messleiste und zwar entsprechend auf die jeweils unterschiedliche Blendenleiste 119 bzw. 118.

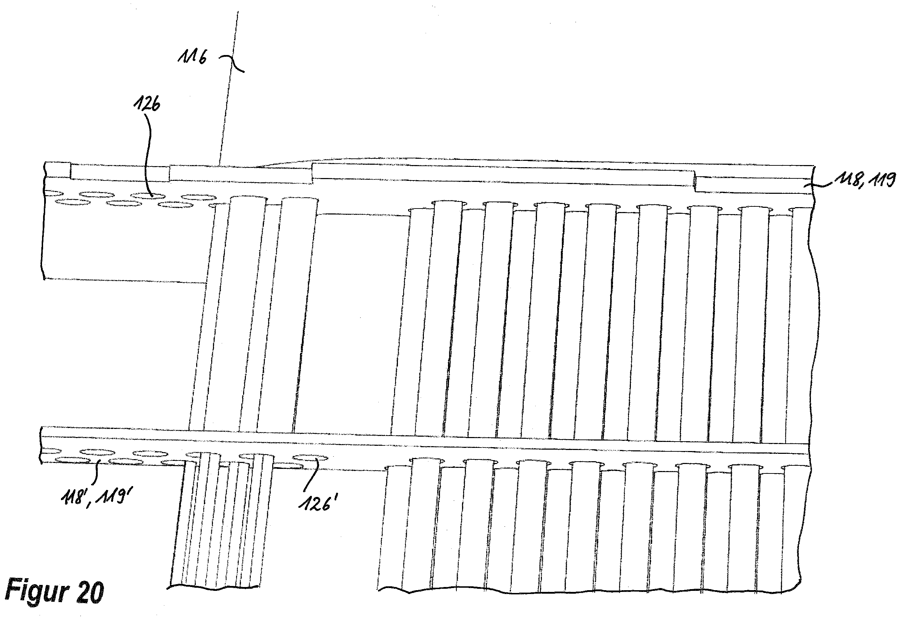

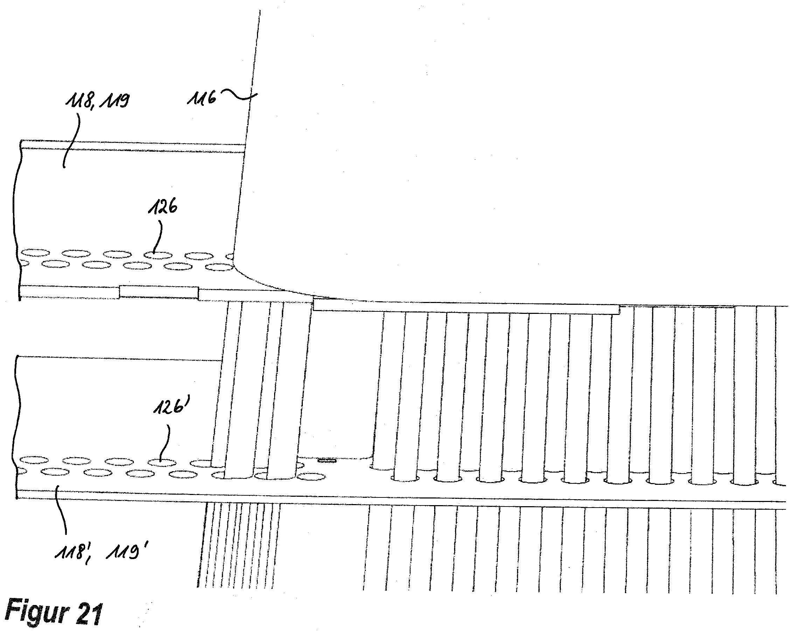

Wie aus den zwei Detailansichten der Figuren 20 und 21 erkennbar ist, bewirken die Empfängerlochblenden 126 und 126' eine Formung der nach unten zu den Empfängerelementen gelangenden Strahlung und insbesondere eine bereits deutliche Reduzierung der Strahlung, die auf nicht zu der unmittelbar gegenüber liegenden Strahlungsquelle gehörende Empfängerelemente fällt. Dieses Abschneiden der Strahlung durch die eigentlich nicht zugeordneten Lochblenden ist durch den erhöhten Einfallswinkel, unter dem Strahlung von einer nicht zugeordneten Strahlungsquelle einfällt, begründet.

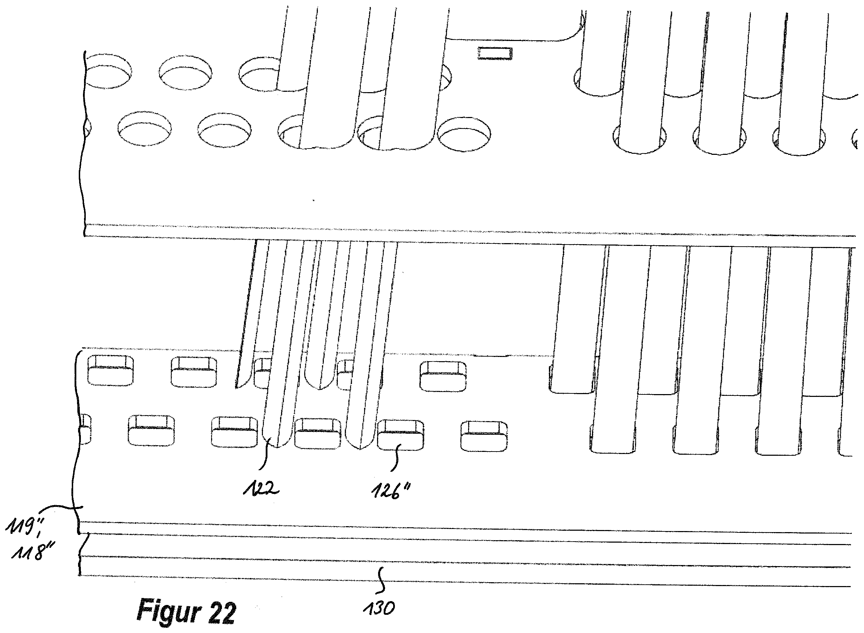

Figur 22 zeigt anschließend die Funktion der innersten Lochblende 126". Es ist erkennbar, dass von der Streustrahlung 122 nichts mehr durch die rechteckförmigen Lochblenden 126" bis zu dem Schaltungsträger 130 gelangt, auf dem die Empfängerelemente angeordnet sind.

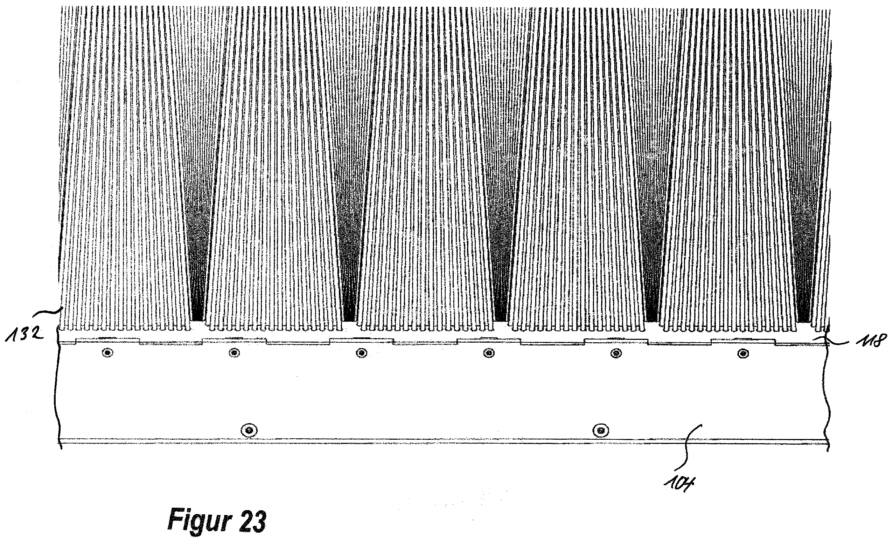

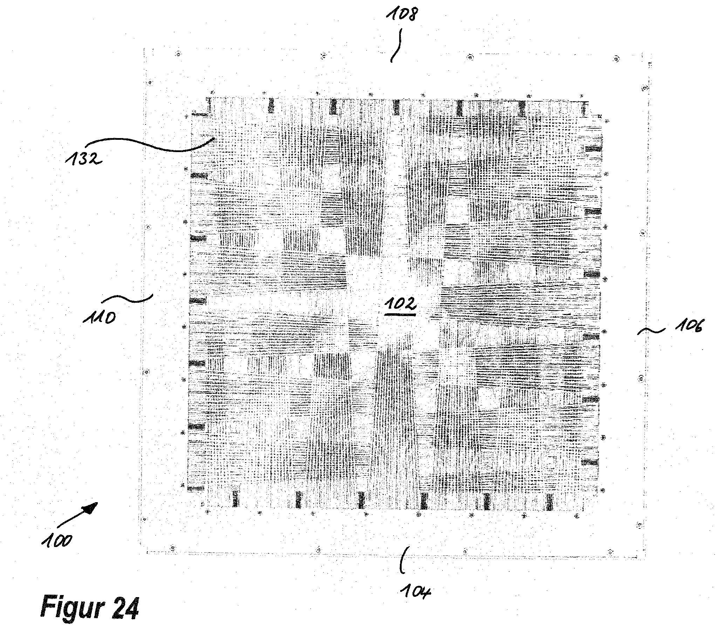

Figur 23 und Figur 24 zeigen schematisch den Lichtvorhang, der zur Berechnung einer Durchschussposition verwendet wird. Jede Strahlungsquelle sendet divergentes Licht aus, das durch die Senderblenden zu einem kegelförmigen Strahlungsbündel mit Spitze in der Strahlungsquelle geformt wird. Durch die Empfängerblenden wird das kegelförmige Strahlungsbündel weiter in einzelne Lichtstrahlen unterteilt. Jeder dieser Lichtstrahlen wird von einem Empfängerelement detektiert.

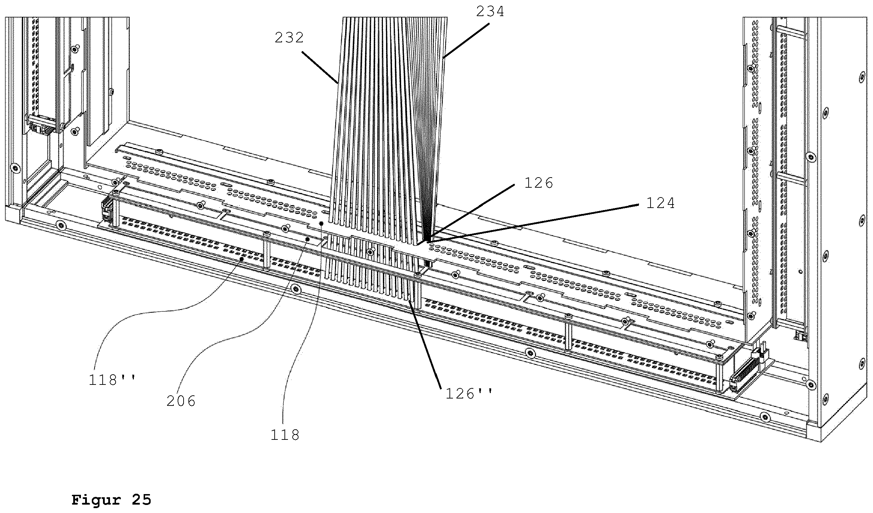

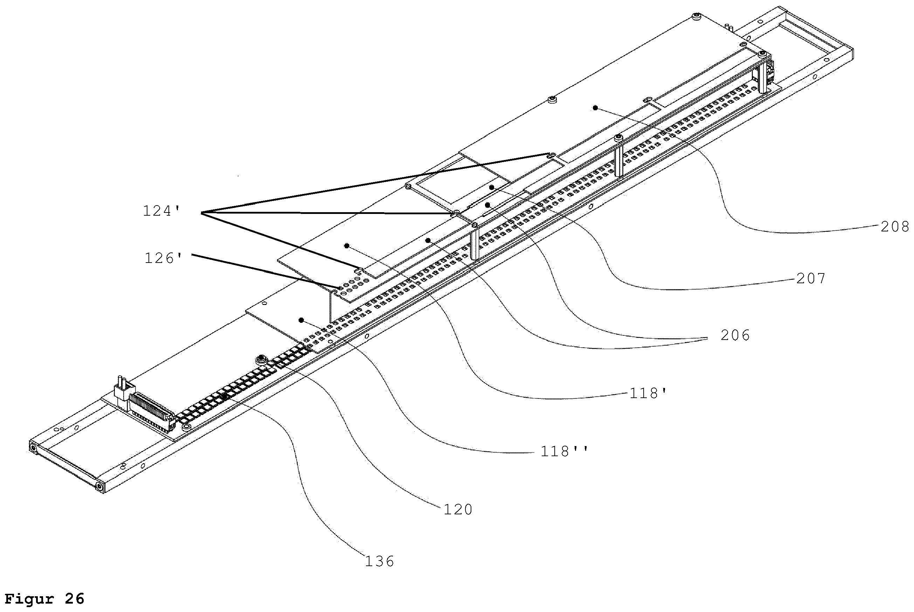

Die Figuren 25 und 26 zeigen nun eine Ausführungsform, bei der die erfindungsgemäßen Filter 206 angebracht sind.

In Figur 25 sind im Vordergrund Lichtstrahlen 232 gezeigt, die durch die Empfängerlochblenden 126, 126' (verdeckt durch optischen Filter 206) und 126" der Blendenleisten 118, 118' (verdeckt durch optischen Filter 206) und 118" zu Strahlen geformt werden und von der Empfängereinrichtung (durch Blende 118" verdeckt) detektiert werden. Im Hintergrund sind divergente Lichtstrahlen 234 ausgehend von einer Strahlungsquelle (durch Blende 118" verdeckt) gezeigt, die durch die Lochblenden 124, 124' (verdeckt) und 124"(verdeckt) den kegelförmigen Umfriss erhalten. Figur 25 zeigt den gleichen Bereich des Messrahmens 100 wie Figur 3. Zusätzlich sind im Messrahmen 100 optische Filter 206 verbaut.

Durch die Verwendung des optischen Filters 206 wird das Einsatzgebiet des Messrahmens 100 vergrößert. Zum Beispiel kann es bei der Verwendung des Messrahmens 100 im Freien durch reflektierte oder direkte Sonneneinstrahlung zu einem störenden Hintergrund kommen. Ein erhöhter Hintergrund kann dazu führen, dass das Signal-Hintergrund-Verhältnis kleiner wird oder sogar die Empfängereinrichtung insensitiv wird, da die Empfängereinrichtung durch die Hintergrundstrahlung ständig in Sättigung ist. Außerdem kann es durch Schwankungen in der Lichtintensität des Hintergrunds, wie zum Beispiel durch eine Wolke, die die Sonne abschattet, zu einer falschen Interpretation des Messergebnisses kommen. Erfindungsgemäß kann das Signal-Hintergrund-Verhältnis dadurch gesteigert werden, dass an der Empfängerlochblende 126' der optische Filter 206 montiert wird.

Der optische Filter 206 wird im vorliegenden Ausführungsbeispiel so gewählt, dass er für Strahlung der Strahlungsquelle, die zur Ermittlung der Treffsicherheit verwendet wird, transparent ist. Demgegenüber ist der optische Filter 206 für Hintergrundstrahlung, die zum Beispiel durch reflektiertes oder direktes Sonnenlicht entsteht, intransparent. Somit wird die Intensität des Messsignals nicht verändert, wohingegen die Intensität des Hintergrunds reduziert wird. Somit ergibt sich ein günstigeres Signal- Hintergrund-Verhältnis.

Wird beispielsweise eine LED als Strahlungsquelle verwendet, kann das Spektrum als nahezu monochromatisch bei zum Beispiel 900 nm angenommen werden. Der entsprechende optische Filter 206 wird dann idealerweise so gewählt, dass er für 900 nm transparent ist und für alle übrigen Wellen intransparent ist. Idealerweise ist der optische Filter 206 nicht nur intransparent, sondern reflektiert die Hintergrundstrahlung. Somit kann Hintergrundstrahlung nicht in den Filter eindringen und auch nicht absorbiert werden. Folglich wird die Erwärmung des optischen Filters minimiert, was insbesondere vorteilhaft ist, da der optischen Filter 206 somit nicht als zusätzliche Wärmehintergrundstrahlungsquelle die Messung störend beeinflusst.

Der optische Filter 206 wird an der Blende 118' (verdeckt durch den optischen Filter 206) montiert. Dadurch kann der optische Filter platzsparend in den Messrahmen 100 integriert werden. Außerdem ist an dieser Position der optische Filter 206 vor Kontamination und Partikeln geschützt. Wie mit Bezug auf Figur 1 bereits ausgeführt, sind an dem Blendenarrays 112 Halterungen 114 vorgesehen, die transparente Abdeckungen aufnehmen können. Diese transparenten Abdeckungen schützen den Messrahmen 100 zum Beispiel vor Kontamination durch Partikel, die zum Beispiel durch Geschosse entstehen. Die optischen Anforderungen an die transparente Abdeckung sind gering und somit können diese Abdeckungen kostengünstig hergestellt werden. Die optischen Filter 206, die höheren optischen Anforderungen genügen müssen, können somit vor äußeren Einflüssen durch Partikel geschützt werden.

Des Weiteren bietet diese Position den Vorteil, dass der Einfluss eines sich erwärmenden optischen Filters 206 reduziert wird. Ist beispielsweise der optische Filter 206 für die Hintergrundstrahlung nicht rein reflexiv, sondern zumindest teilweise absorbierend, kommt es zu einer Erwärmung des optischen Filters 206. Dadurch wird der optische Filter 206 selbst zur Infrarotstrahlungsquelle und führt zu einer Wärmehintergrundkomponente. Da die Intensität der Wärmehintergrundkomponente mit der zweiten Potenz des Abstands abnimmt, ist der gewählte Abstand zur Empfängereinrichtung vorteilhaft, um die Wärmehintergrundkomponente zu reduzieren.

Der Aufbau des Messrahmens 100 mit dem optischen Filter 206 ist in Figur 26 detailliert gezeigt. Der optische Filter 206 liegt auf der Blendenleiste 118' und bedeckt eine Vielzahl von Lochblenden 126'. Wie in Figur 25 zu sehen, hat jedes optische Filter 206 zumindest eine durchgängige Filterfläche, die mindestens so dimensioniert ist, dass sie ein Array von Lochblenden 126', das von einer Strahlungsquelle 232 ausgeleuchtet wird, abdeckt. Vorteilhafterweise ist der optische Filter 206 so dimensioniert, dass er einstückig die gesamte Empfängerlochblende 126' auf der Blendenleiste 118' abdeckt. Filterelemente, die ein Array von Lochblenden 126' abdecken, sind insbesondere vorteilhaft, da sie auf Grund der Größe einfach gehandhabt und eingebaut werden können. Außerdem können systematische Fehler in der Auswertung berücksichtigt werden. Weist zum Beispiel eine Strahlungsquelle und/oder ein optischer Filter 206 einen Fehler auf, kann dieser als systematischer Fehler leicht identifiziert werden und in der Auswertung berücksichtigt werden.

Des Weiteren zeigt Figur 25, wie die optischen Filter 206 mithilfe eines Abstandsblechs 207 quer zur Strahlungsrichtung und mit einem Deckblech 208 entlang der Strahlrichtung positioniert werden. Das Abstandsblech 207 und das Deckblech 208 dienen zur Positionierung der optischen Filter 206. Des Weiteren haben das Abstandsblech 207 und das Deckblech 208 Ausnehmungen, sodass die Langlochblenden 124' und die Empfängerblenden 126' in Strahlrichtung nicht verdeckt werden.

Zusätzlich hat das Abstandsblech 207 Ausnehmungen zum Aufnehmen der optischen Filter 206 und das Deckblech 208 hat Ausnehmungen, die kleiner als die Filterfläche der optischen Filter 206 sind, sodass die optischen Filter 206 entlang der Strahlungsfelder 116 gehalten werden können. Durch das Zusammenspiel von Abstandsblech 207, Deckblech 208 und Blendenleiste 118' werden die optischen Filter 206 in Position gehalten, das Strahlungsfeld wird durch die Blendenleiste 118' geformt und das Spektrum der empfangenen Strahlung ist um den störenden Hintergrund reduziert.

Figur 26 zeigt ein Messsystem nach den Vorgaben für die Disziplin "Olympische Schnellfeuerwaffe" ("Rapid Fire"). Dabei sind fünf Messrahmen 100 mit einem Abstand A der Zielmitten Z von 750 mm vorgesehen. Außerdem ist als Kantenmaß B für die entsprechende Messfläche 550 mm x 550 mm vorgegeben. Daraus ergibt sich, dass für den einzelnen Messrahmen 100 nur noch maximal 100 mm für Blenden, Elektronik und die notwendigen Abstände zur Verfügung stehen. Durch diesen kurzen Abstand zwischen Blende und Elektronik kommt es zum Beispiel bei hohem Sonnenstand zu einem erhöhten Hintergrund. Erfindungsgemäß wird dieser Hintergrund durch den optischen Filter 206 reduziert.

Mit einem Auswertesystem, wie in der Patentschrift EP 3 004 789 B1 beschrieben, und dem beschriebenen Messrahmen können Durchschussanzeigesysteme entwickelt werden, die zuverlässig, kostengünstig, äußerst genau und unabhängig von der Umgebung die Durchschusspositionen ermitteln und anzeigen. Weiterhin können die Dimensionen eines erfindungsgemäßen Messrahmens so gering gehalten werden, dass die für alle Wettbewerbszulassungen erforderlichen Maximalabmessungen zwischen der Mitte einer Zielscheibe zur Mitte der benachbarten Zielscheibe eingehalten werden können. Beispielsweise kann die maximal zulässige Mitte-Mitte-Entfernung zweier Zielscheiben von 750 mm bei einem Zielscheibendurchmesser von 500 mm (Distanz 25 m) eingehalten werden. Diese Maximalabmessungen sind für die ISSF (International Shooting Sport Federation)-Zulassung zur Messung bei der olympischen Disziplin "Rapid Fire" erforderlich.

## Patentansprüche

1. Messrahmen zur berührungslosen optischen Ermittlung einer Durchschussposition eines Geschosses (134) durch eine Zielfläche (102), wobei der Messrahmen (100) umfasst:
mindestens eine erste Strahlungsquelle (120) zum Aussenden eines ersten divergierenden Strahlungsfeldes (116);
mindestens eine zweite Strahlungsquelle (120) zum Aussenden eines zweiten divergierenden Strahlungsfeldes (116), wobei sich das erste und zweite Strahlungsfeld in einer Ebene quer zu einer Durchschussrichtung unter einem Winkel kreuzen;
mindestens eine erste und mindestens eine zweite optische Empfängereinrichtung, die jeweils der mindestens einen ersten und einer zweiten Strahlungsquelle (120) zugeordnet sind;
wobei jede der optischen Empfängereinrichtungen ein Array von optischen Empfängerelementen (136) aufweist, welche die jeweils empfangene Strahlungsintensität messen,
so dass eine räumlich ausgedehnte Abschattungslage infolge des zu detektierenden Geschosses (134) bestimmt wird,
wobei der Messrahmen (100) zum Ausblenden unerwünschter Strahlung mindestens eine Empfängerblende (118, 118', 118") aufweist,
wobei der Messrahmen (100) mindestens einen optischen Filter (206) umfasst, welcher zumindest für einen ersten vorbestimmten Wellenlängenbereich durchlässig ist und welcher für zumindest einen zweiten vorbestimmten Wellenlängenbereich aus dem Spektrum des Sonnenlichts nicht durchlässig ist, und
wobei die Empfängerblende (118, 118', 118") ein Array von Lochblenden (126, 126', 126") aufweist, von denen jede Lochblende einem optischen Empfängerelement (136) zugeordnet ist,
**dadurch gekennzeichnet, dass**
der optische Filter (206) an der Empfängerblende (118, 118', 118") anliegt und eine Filterfläche des optischen Filters zumindest ein Array von Lochblenden (126, 126', 126") abdeckt.

2. Messrahmen nach Anspruch 1, wobei der erste Wellenlängenbereich zumindest ein lokales Maximum im Spektrum der Strahlungsquelle (120) abdeckt.

3. Messrahmen nach einem der vorhergehenden Ansprüche, wobei der optische Filter Strahlung aus dem zweiten Wellenlängenbereich insbesondere reflektiert und/oder
wobei der optische Filter eine beschichtete Glasscheibe umfasst.

4. Messrahmen nach einem der vorhergehenden Ansprüche, wobei die Empfängerblende (118, 118', 118") in Strahlrichtung aufeinander folgende Lochblenden (126, 126', 126") mit unterschiedlicher Öffnungsform aufweist.

5. Messrahmen nach Anspruch 1, wobei der optische Filter (206) durch ein Abstandsblech (207) quer zur Strahlrichtung positioniert wird.

6. Messrahmen nach Anspruch 5, wobei das Abstandsblech (207) Aussparungen aufweist, die der Filterfläche entsprechen.

7. Messrahmen nach einem der Ansprüche 1 bis 6, weiterhin umfassend ein Deckblech (208), wobei der optische Filter (206) durch das Deckblech (208) und die Empfängerblende (118, 118', 118") in Strahlrichtung positioniert wird.

8. Messrahmen nach einem der vorhergehenden Ansprüche, wobei die optischen Empfängerelemente (136) in mindestens zwei Reihen angeordnet sind und die Empfängerelemente (136) einer Reihe versetzt gegenüber den Empfängerelementen (136) einer benachbarten Reihe angeordnet sind.

9. Messrahmen nach einem der vorhergehenden Ansprüche, wobei jedes der Empfängerelemente (136) eine Fotodiode umfasst und/oder wobei die Strahlungsquelle (120) eine Licht emittierende Diode, LED, die Infrarotstrahlung aussendet, oder eine Laserdiode aufweist.

10. Messrahmen nach einem der vorhergehenden Ansprüche, weiterhin umfassend mindestens eine Senderblende zum Formen des von der Strahlungsquelle ausgesendeten Strahlungsfeldes

11. Messrahmen nach Anspruch 10, wobei die Senderblende aufeinanderfolgende Lochblenden mit in Strahlrichtung zunehmendem Blendendurchmesser aufweist, .

12. Messrahmen nach einem der vorhergehenden Ansprüche, wobei die erste und zweite Strahlungsquelle (120) und die erste und zweite Empfängereinheit jeweils so angeordnet sind, dass sich die Mittelachsen der ausgesendeten Strahlungsfelder (116) rechtwinklig kreuzen

13. Messrahmen nach einem der vorhergehenden Ansprüche, wobei der Messrahmen (110) die Zielfläche (102) im Wesentlichen rechteckförmig begrenzt und vier identisch aufgebaute Messleisten (104, 106, 108, 110) aufweist, die entlang der Kanten der rechteckförmigen Begrenzung angeordnet sind

14. Messrahmen nach Anspruch 13, wobei jede der Messleisten (104, 106, 108, 110) mindestens eine Strahlungsquelle (120) und mindestens eine Empfängereinrichtung umfasst.

15. Anzeigesystem zur Anzeige eine Durchschussposition eines Geschosses durch eine Zielfläche mit mindestens einem Messrahmen (100) nach einem der Ansprüche 1 bis 14, mindestens einer Auswertevorrichtung und mindestens einer Anzeigevorrichtung.

## Claims

1. Measuring frame for contactless optical sensing of a penetration position of a projectile (134) through a target surface (102), wherein the measuring frame (100) comprises:
at least one first radiation source (120) for emitting a first diverging radiation field (116);
at least one second radiation source (120) for emitting a second divergent radiation field (116), said first and second radiation fields intersecting at an angle in a plane transverse to a direction of projectile propagation;at least one first and at least one second optical receiving means associated with said at least one first and one second radiation source (120), respectively;
each of the optical receiving means comprising an array of optical receiving elements (136) each measuring the received radiation intensity such that a spatially extended shading position is determined as a result of the projectile (134) to be detected,
the measuring frame (100) having at least one receiver diaphragm (118, 118', 118") for suppressing undesired radiation, the measuring frame (100) comprising at least one optical filter (206) which is transparent for at least a first predetermined wavelength range and which is not transparent for at least a second predetermined wavelength range from the spectrum of sunlight, and
the receiver aperture (118, 118', 118") comprising an array of pinholes (126, 126', 126"), each pinhole being associated with an optical receiver element (136),
**characterised in that:**
the optical filter (206) rests against the receiver aperture (118, 118', 118") and a filtering surface of the optical filter covers at least one array of pinholes (126, 126', 126").

2. The measuring frame according to claim 1, wherein the first wavelength range covers at least one local maximum in the spectrum of the radiation source (120).

3. The measuring frame according to one of the preceding claims, wherein the optical filter in particular reflects radiation from the second wavelength range and/or wherein the optical filter comprises a coated glass pane.

4. The measuring frame according to one of the preceding claims, wherein the receiver aperture (118, 118', 118") has successive aperture apertures (126, 126', 126") with different aperture shapes in the beam direction.

5. The measuring frame according to claim 1, wherein the optical filter (206) is positioned transversely to the beam direction by a spacer plate (207).

6. The measuring frame according to claim 5, the spacer plate (207) having recesses corresponding to the filter surface.

7. The measuring frame according to any of claims 1 to 6, further comprising a cover plate (208), wherein the optical filter (206) is positioned in beam direction by the cover plate (208) and the receiver diaphragm (118, 118', 118").

8. The measuring frame according to one of the preceding claims, wherein the optical receiver elements (136) are arranged in at least two rows and the receiver elements (136) of a row are arranged offset with respect to the receiver elements (136) of a neighbouring row.

9. The measuring frame according to one of the preceding claims, wherein each of the receiving elements (136) comprises a photodiode and/or wherein the radiation source (120) comprises a light emitting diode, LED emitting infrared radiation, or a laser diode.

10. The measuring frame according to one of the preceding claims, further comprising at least one transmitter aperture for shaping the radiation field emitted by the radiation source.

11. The measuring frame according to claim 10, wherein the transmitter aperture has successive aperture apertures with an aperture diameter increasing in the beam direction.

12. The measuring frame according to one of the preceding claims, wherein the first and second radiation sources (120) and the first and second receiver units are each arranged such that the center axes of the emitted radiation fields (116) intersect at right angles.

13. The measuring frame according to one of the preceding claims, the measuring frame (110) defining the target surface (102) substantially rectangularly and comprising four identically constructed measuring strips (104, 106, 108, 110) arranged along the edges of the rectangular boundary.

14. The measuring frame according to claim 13, wherein each of the measuring scales (104, 106, 108, 110) comprises at least one radiation source (120) and at least one receiver device.

15. The display system for displaying a penetration position of a projectile through a target surface with at least one measuring frame (100) according to one of claims 1 to 14, at least one evaluation device and at least one display device.

## Revendications

1. Cadre de mesure pour la détection optique sans contact d'une position de trajet d'un projectile (134) à travers une surface cible (102), dans lequel le cadre de mesure (100) comprend:
au moins une première source de rayonnement (120) pour émettre un premier champ de rayonnement divergent (116);
au moins une seconde source de rayonnement (120) pour émettre un second champ de rayonnement divergent (116), lesdits premier et second champs de rayonnement se coupant selon un angle dans un plan transversal à une direction de propagation de projectile; au moins un premier et au moins un second moyen de réception optique associés à ladite au moins une première et une seconde source de rayonnement (120), respectivement;
chacun des moyens de réception optique comprenant un réseau d'éléments de réception optiques (136) mesurant chacun l'intensité de rayonnement reçue de telle sorte qu'une position d'ombrage spatialement étendue est déterminée en fonction du projectile (134) à détecter,
le cadre de mesure (100) comportant au moins un diaphragme de réception (118, 118', 118") pour supprimer un rayonnement indésirable, le cadre de mesure (100) comprenant au moins un filtre optique (206) qui est transparent pour au moins une première plage de longueurs d'onde prédéterminée et qui n'est pas transparent pour au moins une seconde plage de longueurs d'onde prédéterminée du spectre solaire, et
l'ouverture de réception (118, 118', 118") comprenant un réseau de trous d'épingle (126, 126', 126"), chaque trou d'épingle étant associé à un élément récepteur optique (136),
**caractérisé en ce que:**
le filtre optique (206) repose contre l'ouverture de réception (118, 118', 118") et une surface filtrante du filtre optique recouvre au moins une rangée de trous d'épingle (126, 126', 126").

2. Cadre de mesure selon la revendication 1, dans lequel la première plage de longueurs d'onde couvre au moins un maximum local dans le spectre de la source de rayonnement (120).

3. Cadre de mesure selon l'une des revendications précédentes, dans lequel le filtre optique, en particulier, réfléchit le rayonnement de la seconde plage de longueurs d'onde et/ou dans lequel le filtre optique comprend un panneau de verre revêtu.

4. Cadre de mesure selon l'une des revendications précédentes, dans lequel l'ouverture du récepteur (118, 118', 118") présente des ouvertures successives (126, 126', 126") avec différentes formes d'ouverture dans la direction du faisceau.

5. Cadre de mesure selon la revendication 1, dans lequel le filtre optique (206) est positionné transversalement à la direction du faisceau par une plaque d'entretoise (207).

6. Cadre de mesure selon la revendication 5, la plaque d'entretoise (207) présentant des évidements correspondant à la surface du filtre.

7. Cadre de mesure selon l'une quelconque des revendications 1 à 6, comprenant en outre une plaque de recouvrement (208), dans lequel le filtre optique (206) est positionné dans la direction du faisceau par la plaque de recouvrement (208) et la membrane de réception (118, 118', 118").

8. Cadre de mesure selon l'une des revendications précédentes, dans lequel les éléments de réception optiques (136) sont disposés en au moins deux rangées et les éléments de réception (136) d'une rangée sont disposés décalés par rapport aux éléments de réception (136) d'une rangée adjacente.

9. Cadre de mesure selon l'une des revendications précédentes, dans lequel chacun des éléments récepteurs (136) comprend une photodiode et/ou dans lequel la source de rayonnement (120) comprend une diode électroluminescente, une DEL émettant un rayonnement infrarouge ou une diode laser.

10. Cadre de mesure selon l'une des revendications précédentes, comprenant en outre au moins une ouverture d'émetteur pour former le champ de rayonnement émis par la source de rayonnement.

11. Cadre de mesure selon la revendication 10, dans lequel l'ouverture de l'émetteur présente des ouvertures successives avec un diamètre d'ouverture croissant dans la direction du faisceau.

12. Cadre de mesure selon l'une des revendications précédentes, dans lequel les première et seconde sources de rayonnement (120) et les première et seconde unités de réception sont disposées de telle sorte que les axes centraux des champs de rayonnement émis (116) se coupent à angle droit.

13. Cadre de mesure selon l'une des revendications précédentes, le cadre de mesure (110) définissant la surface cible (102) de manière sensiblement rectangulaire et comprenant quatre bandes de mesure (104, 106, 108, 110) de construction identique disposées le long des bords de la limite rectangulaire.

14. Cadre de mesure selon la revendication 13, dans lequel chacune des échelles de mesure (104, 106, 108, 110) comprend au moins une source de rayonnement (120) et au moins un dispositif récepteur.

15. Système d'affichage pour afficher une position de pénétration d'un projectile à travers une surface cible avec au moins un cadre de mesure (100) selon l'une des revendications 1 à 14, au moins un dispositif d'évaluation et au moins un dispositif d'affichage.
